**Europäisches Patentamt**

**European Patent Office**

**Office européen des brevets**

(11) Publication number: **0 015 393**

**A1**

(12) # EUROPEAN PATENT APPLICATION

(21) Application number: **80100584.4**

(22) Date of filing: **05.02.80**

(51) Int. Cl.³: **E 05 F 15/16**

(30) Priority: **06.02.79 DE 2904434**

(43) Date of publication of application: **17.09.80**
**Bulletin 80/19**

(84) Designated Contracting States: **AT CH FR GB IT NL SE**

(71) Applicant: **Erwin Sick GmbH Optik-Elektronik,**
**Sebastian-Kneipp-Strasse 1, D-7808 Waldkirch (DE)**

(72) Inventor: **Häfner, Manfred, Weberstrasse 2,**
**D-7802 Merzhausen (DE)**
Inventor: **Langenbach, Erwin, Eisenbahnstrasse 15,**
**D-7808 Waldkirch-Buchholz (DE)**
Inventor: **Wagner, Heinz, Kandelstrasse 1, D-7831 Sexau**
**(DE)**

(74) Representative: **Patentanwälte Manitz, Finsterwald und**
**Grämkow, Robert-Koch-Strasse 1,**
**D-8000 München 22 (DE)**

(54) **Motorised actuation apparatus for opening and closing slidable vehicle windows.**

㊲    The arrangement features the provision in each motor circuit of a respective break or change-over contact (21, 22, 23, 24, 21', 22', 23', 24') of a relay (15) which is actuated by a micro switch strip (19, 19') provided along the frame edge of the associated window (11, 12, 13, 14) via a control apparatus (17). The motor current can thus be either switched off or reversed in the opposite direction if an object is trapped between the frame edge (16) and the window edge (18).

The specification also relates to two novel micro switch strips (19, 19') which are arranged on the window frame alongside the edge of the window pane in its raised position.

The invention relates to motorised actuation apparatus for opening and closing a slidable vehicle window there being a drive motor for each driven window and an actuation switch in respect of each motor each switch having a window closing position, a window opening position and a neutral position.

Actuation devices of this kind are known in many variants. They are generally actuated by means of a change-over switch arranged alongside the driver's seat so that a desired vehicle window can be either opened or closed. Problems however occur with such actuation devices. For example on actuation of a window in the closure direction by the driver the finger of a passenger, in particular of a child can become trapped. This danger is particularly present if the driver actuates the window during a journey when he is required to concentrate completely on the traffic. Moreover the danger exists with children that they put their heads out of the window during the journey so that on automatic closing of the respective window the head or the throat of the child could become trapped.

To protect against objects becoming trapped against the closure edges of doors there already exist switch strips which extend along the associated closure edge and, on the exertion of pressure via a trapped object, close a circuit which then terminates or reverses the closing operation via a control device (DE-OS 26 44 608 and DE-OS 27 19 438). It is also already known to construct the switch strip of two electrodes arranged spaced apart from each other which approach one another when loads are applied to the closure edge in the closure direction and which finally contact to initiate the control signal.

- 1 -

0015393

The previously known protective devices are however not
suitable for use on vehicle windows because in this case
the closure edge of the window must be pressed with not
inconsiderable pressure against the closure edge or frame
of the window opening because of the necessity to seal
the window. If conventional strip switches were used this
would result in the known protective device initiating a
change-over signal without an object actually being trapped
between the window and frame.

The principal object of the invention thus resides in providing motorised actuation apparatus of the kind initially
named in which the movement of the window will automatically
be stopped or reversed when an object becomes trapped between
the frame edge of the window opening and the closure edge
of the window without however distadvantageously affecting
the execution of the normal closing operation.

In order to accomplish this task the invention envisages
in motorised actuation apparatus of the initially defined
kind that, in each motor circuit, there is connected a
break contact or switch-over contact of a relay which is
actuated by a micro switch strip provided along the frame
edge of the associated window via a control apparatus
so that the motor current can be respectively switched off
or reversed in the opposite direction only when an object
is trapped between the frame edge and the window edge
but not however during an undisturbed closing operation.

For this purpose it is in particular envisaged that the
micro switch strip is attached at the interior side of
the window frame directly alongside the line where the
window edge meets the edge of the frame.

- 2 -

The micro switch strip thus responds to pressure operating in the closure direction. In accordance with the invention the micro switch strip thus does not lie directly facing the edge of the slidable window but rather at a distance to the side of this edge such that the edge of the window which contacts its abutment surface on the frame of the window opening does not itself result in contact between the contacts of the micro switch strip but rather only an object, for example a hand or a head which becomes trapped between the window edge and the edge of the frame. The arrangement of the micro switch strip at the interior side of the frame thus takes account of the fact that trapped body parts extend into the dangerous region from the interior of the vehicle.

An arrangement is preferred in which the relay has a break or switch-over contact for each motor circuit and the frame edge of each sliding window has a micro switch strip with the micro switch strips respectively connected in parallel to the control apparatus. Thus for all the motor circuits only a single relay with several contacts is required which represents a very economical solution.

One particularly favoured practical arrangement which is economical to manufacture is characterized in that the micro switch strip comprises two thin sheet metal steel strips which form respective electrodes of a switch and which are arranged parallel to one another and spaced apart by separating insulating strips which are arranged between them at their margins and which have a transverse spacing which allows contact between the electrodes.

In accordance with a further particularly advantageous embodiment it is envisaged that the micro switch strip comprises a coil spring, which forms the one electrode and is arranged in an elongate insulating carrier, and a conductive silicon rubber strip which forms the other electrode and which extends parallel to the coil spring and is spaced therefrom. In this case the silicon rubber strip preferably extends in arch-like form over the coil spring. Both of the afore-mentioned embodiments of the micro switch strip are housed in rubber sections or profiles which are sealed against the ingress of water at their ends.

If the invention is applied to a vehicle window which enters into a sealing slot on closing then, in accordance with the invention, the micro switch strip is arranged alongside the entry end of the slot and the distance from the end of the slot should in turn be chosen so that during the normal closing operation the micro switch strip does not respond but rather only responds when an object becomes trapped.

The invention will now be described by way of example only and with reference to the accompanying drawings in which are shown

Fig. 1   a schematic partially perspective illustration of a motorised actuation apparatus for the opening and closing of sliding vehicle windows showing two different embodiments of the micro switch strip,

Fig. 2   an internal view of a vehicle door with motorised vertically sliding window and a micro switch strip,

- 4 -

Fig. 3   a cross-section of the door frame in the vicinity of
         the sealing slot for the vertically adjustable sliding
         window pane and

Fig. 4   a schematic illustration of a further switch over
         relay suitable for the motorised actuation apparatus
         of the preceding figures.

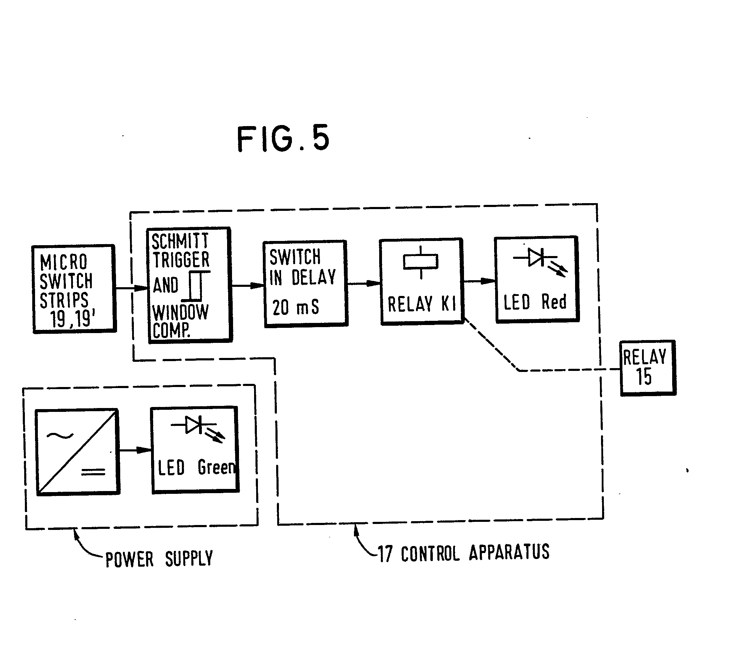

Fig. 5   a block diagram on one suitable form of control
         apparatus for use with the embodiment of Figs. 1-4,

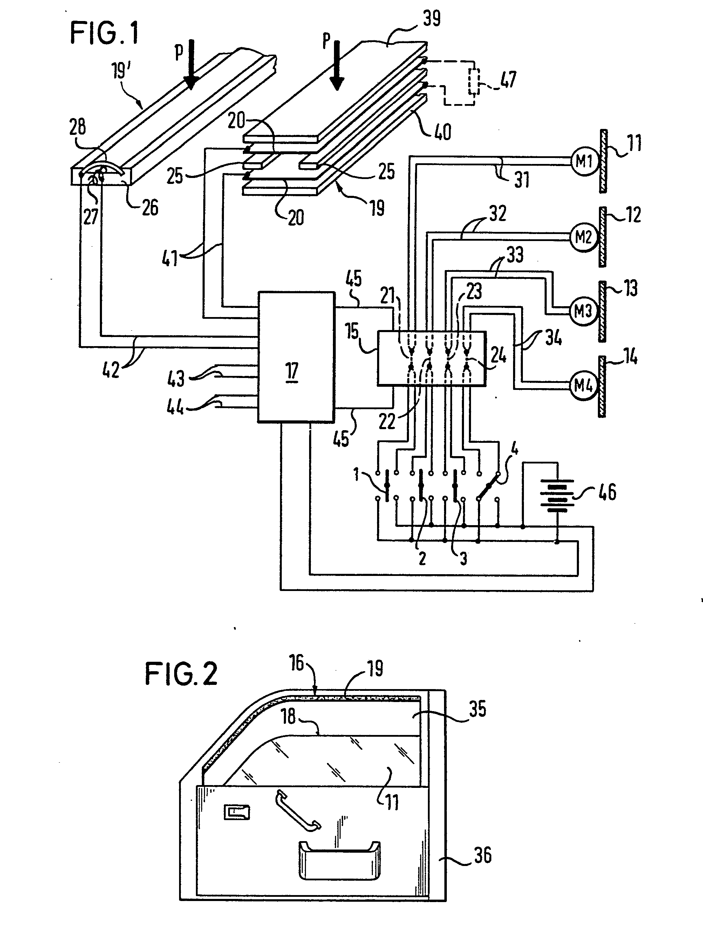

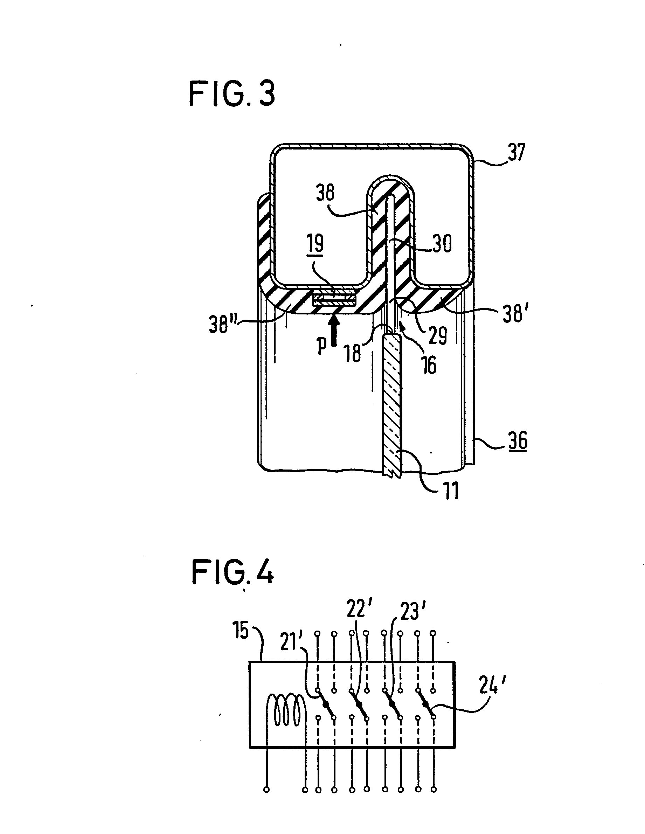

As seen in Fig. 2 a micro switch strip 19 extends along the
window frame or frame edge 16 of the window opening 35 of
a vehicle door 36 such that the window edge or closure edge 18
of a motorised vertically adjustable window 11 passes the
micro switch strip 19 on closing of the window. Fig. 3 illustrates
in greater detail how the micro switch strip 19 in accordance
with the invention is arranged relative to the movement path
of the edge 18 of the window 11. In accordance with Fig. 3
the door frame 37 has at its lower side an elongate entry
slot 30 which is closed in the illustrated manner by an
elastic sealing material 38. The sealing material has
continuations 38', 38'' which extend partially around
the door frame 37 outside of the slot 30. Motorised raising
of the side window 11 results in the window reaching the
vicinity of the window frame 16 at the point 29. On raising the window still further it enters into the slot 30 which is dimensioned to be somewhat narrower than the thickness of the window pane. This results in a sealed engagement between the window 11 and the window frame 37.

The micro switch strip 18 is arranged directly alongside the entry point 29 on the interior side of the elastic continuation 38' of the slot trim 38 and can be seen in enlarged broken away illustration at the top right hand side of Fig. 1. As seen in Fig. 1 the micro switch strip 19 comprises two elongate thin spring steel sheet metal strips 20 which extend in the direction of the window frame and between which are arranged at the inner and outer sides narrow separating insulating strips 25. The strip 19 is illustrated in exploded view in Fig. 1, i.e. in the assembled condition the sheet metal strips 20 lie directly in contact with the separating strips 25. The sheet metal strips 20 are covered externally by elastic cover strips 39 and 40. On exerting a pressure in the direction of the arrow P in Fig. 1 or Fig. 3 the two sheet metal strips 20 approach one another until they contact so that in this case an electrical contact is closed. In order to generate, as a result of this contact procedure, an electrical switching signal the two spring steel sheet metal strips 20 which each form a respective electrode are connected via a pair of conductors 41 to a control apparatus 17, Fig. 1. The micro-switch strips of other windows 12, 13, 14 can be likewise connected via further pairs of conductors 42, 43, 44 to the control apparatus 17. The control apparatus 17 which will be later described in more detail, is supplied with a DC voltage of 12 volts from the vehicle battery.

On closing the electrical switch defined by the micro switch strip 19 the control apparatus 17 passes an electrical switching signal to a relay 15 via a pair of outlet conductors 45. The relay 15 contains a pair of contacts 21, 22, 23 and 24 for each window actuation motor circuit 31, 32, 33, 34. If
the relay 15 is not activated the switch contact pairs 21, 24
are closed. These contacts connect the motors M1, M2, M3 and
M4 for actuation of the windows 11, 12, 13, 14 via change-
over switches 1, 2, 3, 4 with the vehicle battery 46. The
windows 11, 12, 13, 14 are only schematically indicated in
Fig. 1. By changing over the switches 1 to 4 into one of
the two switching positions, i.e. a window opening position
and a window closing position an opening or closing current
is passed to the motors.

If however the relay 15 is excited by contact of the electrodes
of the micro switch strip then the switches 21 to 24 are
interrupted and the motors M1 to M4 no longer receive any
current i.e. are no longer energised. Further closing of
the window is thus avoided if a hand, a head or other object
is trapped.

In the embodiment of Fig. 4 the relay 15 is provided with
change-over contacts 21', 22', 23', 24' in place of the
break contacts 21 to 24 respectively. Thus on changing the
state of an energisation of the relay 15 the direction of
current through the individual motors is reversed so that
on excitation of the relay 15 a window closing process is
reversed to a window opening process.

As seen at the top left hand side of Fig. 1 an alternative
embodiment of a micro switch strip 19' is connected to the
control apparatus 17 via the pair of conductors 42. This
micro switch strip 19' consists of an insulating elongate
carrier 26 which merely requires to be sufficiently flexible
that it can be laid along a curved window frame 16. Inside the
carrier there is placed, in the longitudinal direction of
the carrier a coil spring 27 which is embedded at one side in the carrier 26 and which lies with its metallic surface
bared at the opposite side. An arch-like curved electrically
conducting silicon rubber strip 28 is located spaced apart
from the coil spring 27 and has both its longitudinal edges
anchored in the insulating carrier strip or body 26. The
curvature of the arch is so chosen that the strip 28 does
not normally contact the coil spring 27. If however during
the course of a closing operation an object becomes trapped
in the window then a pressure P is exerted on the silicon
rubber strip so that this is compressed and is brought into
contact with the coil spring 27. Because the silicon rubber
strip 28 is connected with one pole of the supply line 42
and the coil spring 27 is connected to the other pole
thereof, contact of the strip 28 with the coil spring 27
generates a signal in the control apparatus 17 which causes
the relay 15 to respond. The micro switch strip 19 is capable
of being manufactured particularly economically. It is
also particularly suitable for following the curvatures found
in the vicinity of window frames.

It is important that at least four independent micro switch
strips 19 or 19' can be connected to the control apparatus 17.

It is furthermore particularly advantageous if the two
electrodes of each micro switch strip 19 or 19' are bridged
by a protective resistor 47 such that a small residual
control current flows through the conductors 41 to 44 even
in the passive non-activated condition of the micro switch
strips. The control apparatus can then be so constructed
in accordance with the initially mentioned Offenlegungsschriften that a stop or change-over signal is initiated
both when the passive control current is exceeded (by
closing of the contacts) and also if this passive current
is reduced in order to provide the driver with an indication if one of the micro strip switches 19, 19' is damaged.
Damage would either lead to a raising or lowering of the
passive control current.

In principle all windows of a vehicle should be equipped
with the same type of micro switch strip 19, 19'.

Turning now to Fig . 5        there can be seen a circuit
block diagram of the control apparatus 17. This apparatus
which is already known per se and has been used in connection
for example with the arrangements disclosed in the two
initially mentioned German Offenlegungsschriften. The
apparatus can for example be purchased from Erwin Sick GmbH
of Germany under their designation "Schaltgerät SLE 04".
Equivalent apparatus is also available from Siemens GmbH
of Germany.

The basic function of the control apparatus 17 is, as
previously mentioned, to energise the relay 15 when any
one of the four micro switch strips responds to contact
pressure. It is also desirable to recognise when the micro
switch strips are inoperative either by way of a physical
break or a short circuit.

Clearly a physical  break leads to  raised or infinite
resistance, so that the passive current reduces, and a short
circuit results in an increased current in similar fashion
to an applied contact pressure. It is of course also
necessary for such conditions to be recognised on initially
switching on the apparatus.

For this purpose the four micro switch strips 19,19' are
applied in parallel to a combined Schmitt trigger and window
comparator circuit which recognises any of the afore-mentioned

- 9 -

operating events by change of the passive current be it an increase or decrease.

The control apparatus features a relay $K_1$ which acts to energise or de-energise the relay 15 so that the contacts 24 are either interrupted or changed over.

Thus, following the occurrence of an operating "event" and after an initial switch-in delay of 0.02 seconds the relay $K_1$, which is normally engaged, disengages stopping or reversing the motors via the relay 15 and contacts 24. Providing the event is of a temporary nature the signal from the Schmitt trigger and window comparator will cease due for example to the removal of the trapped object and the relay $K_1$ will once more engage.

A green light emitting diode (led) indicates the provision of power to the control apparatus from the battery 46 and a red diode indicates that relay $K_1$ has dropped out.

0015393

We claim:

1. Motorised actuation apparatus for opening and closing
   a slidable   vehicle window with a drive motor for each
   driven window and an actuation switch in respect of each
   motor, each switch having a window closing position a
   window opening position and a neutral position, the apparatus
   being characterized in that, in each motor circuit, there
   is connected a break contact or switch-over contact (21,
   22, 23, 24; 21', 22', 23', 24') of a relay (15) which is
   actuated by a micro switch strip (19, 19') provided along
   the frame edge (16) of the associated window (11, 12, 13,14)
   via a control apparatus (17) so that the motor current can
   be respectively switched off or reversed in the opposite
   direction only when an object is trapped between the
   frame edge (16) and the window edge (18) but not however
   during an undisturbed closing operation.

2. Apparatus according to claim 1 and characterized in that
   the relay (15) has a break or switch-over contact
   (21, 22, 23, 24; 21', 22', 23', 24') for each motor circuit
   (31, 32, 33, 34) and the frame edge (16) of each
   slidable window (11, 12, 13, 14) has a micro switch strip
   (19, 19') and the micro switch strips are
   respectively connected in parallel to the control
   apparatus (17).

3. Apparatus according to either of claims 1 and 2 and
   characterized in that the micro switch strip (19) comprises
   two thin spring sheet metal steel strips (20) which
   respectively form an electrode of a switch, and which are
   arranged parallel to one another and spaced apart by

- 1 -

separating insulating strips (25) which are arranged
between them at their margins and which have a transverse
spacing (A) which allows contact between the electrodes.

4. Apparatus according to either of claims 1 or 2 and
   characterized in that the micro switch strip (19)
   comprises a coil spring (22) which forms the one electrode
   and is arranged in an elongate insulating carrier (26)
   and a conductive silicon rubber strip (28) which forms
   the other electrode and which extends parallel to the
   coil spring and is spaced therefrom.

5. Apparatus according to claim 4 and characterized in that
   the silicon rubber strip (28) extends in arch-like form
   over the coil spring (27).

6. Apparatus according to any one of the preceding claims
   and characterized in that the micro switch strip (19, 19')
   is attached at the interior side of the window frame
   directly alongside the line (29) where the window edge (18)
   meets the frame edge (16) and responds to pressure
   effective in the closure direction of the window (11).

7. Apparatus in accordance with claim 6 for a vehicle window
   which enters on closing into a sealing slot and characterized
   in that the micro switch strip (19, 19') is arranged
   alongside the entry end (29) of the slit (30).

FIG.1

FIG.2

0015393

## FIG. 3

## FIG. 4

## FIG.5

MICRO SWITCH STRIPS 19,19'

SCHMITT TRIGGER AND WINDOW COMP.

SWITCH IN DELAY 20 mS

RELAY K1

LED Red

RELAY 15

LED Green

POWER SUPPLY

17 CONTROL APPARATUS

| Category | Citation of document with indication, where appropriate, of relevant passages | Relevant to claim |
|---|---|---|
| X | FR - A - 2 155 729 (BOSCH)<br>* Page 4, lines 9-18; 17-21; 29-40; page 5, lines 31-40; page 6, lines 1-6; figures 4,7 *<br>-- | 1,3,6,7 |
| | FR - A - 2 089 278 (CHRYSLER)<br>* Page 2, lines 7-39; page 3, lines 1-9 *<br>-- | 1,6,7 |
| | FR - A - 2 171 871 (COMPAGNIE DE CAOUTCHOUC MANUFACTURE DYNAMIC)<br>* Page 2, lines 1-31; figure 1 *<br>-- | 1,3,6,7 |
| | DE - A - 2 142 370 (PEUGEOT)<br>* Page 6, paragraph 2; figure 4 *<br>-- | 1,4,6,7 |
| | DE - A - 2 643 505 (HOLZER)<br>* Page 1, claim 3; figures 5-7 *<br>-- | 4,5 |
| | US - A - 3 973 099 (MORRIS)<br>* Abstract *<br>---- | 4 |

**DOCUMENTS CONSIDERED TO BE RELEVANT**

**CLASSIFICATION OF THE APPLICATION (Int. Cl. ³)**

E 05 F 15/16

**TECHNICAL FIELDS SEARCHED (Int.Cl. ³)**

E 05 F
H 01 H

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| | 07-05-1980 | NEYS |

EPO Form 1503.1 06.78